# EUROPEAN PATENT SPECIFICATION

(11) **EP 4 293 958 B1**
(45) Date of publication and mention of the grant of the patent: **30.07.2025**
(21) Application number: 22211250.0
(22) Date of filing: 02.12.2022
(51) Int. Cl.: H04L 9/40, B66B 3/00, B66B 5/00, H04L 9/00, H04W 4/029

(54) **ELEVATOR SYSTEM CONFIGURED FOR STORING AND SHARING ELEVATOR TRIPS**
AUFZUGSSYSTEM MIT KONFIGURATION ZUM SPEICHERN UND TEILEN VON AUFZUGSFAHRTEN
SYSTÈME D'ASCENSEUR CONFIGURÉ POUR STOCKER ET PARTAGER DES TRAJETS D'ASCENSEUR

(30) Priority: 14.06.2022 US 202217840015
(43) Date of publication of application: 20.12.2023
(73) Proprietor: Otis Elevator Company, Farmington, Connecticut 06032 (US)
(72) Inventor: MIRIYALA, Pradeep, 500081 Telangana (IN); DHAR, Abhinav, 500081 Telangana (IN)
(74) Representative: Dehns

(56) References cited:
- CN-B- 108 609 448
- US-A1- 2017 071 528
- US-A1- 2020 053 102
- US-A1- 2021 078 825
- WILSON KATHLEEN BRIDGET ET AL: "Prospecting non-fungible tokens in the digital economy: Stakeholders and ecosystem, risk and opportunity", BUSINESS HORIZONS, ELSEVIER, AMSTERDAM, NL, vol. 65, no. 5, 29 October 2021 (2021-10-29), pages 657 - 670, XP087148685, ISSN: 0007-6813, [retrieved on 20211029], DOI: 10.1016/J.BUSHOR.2021.10.007

## Description

### BACKGROUND

The embodiments relate to elevator systems and more specifically to an elevator system configured for storing and sharing elevator trips.

There may be a desire to store and share information about elevator trips taken at locations of interest such as the Empire State Building. When people exchange this information, there may be a desire to confirm that this information is authentic. This is because, for example, with the advent of artificial intelligence in area of image processing, photo memories can be faked.

CN 108609448 B discloses an elevator accident public system based on a block chain. A plurality of nodes are used for storing collected elevator working state historical data are/or elevator user complaint data; the nodes are used for running an intelligent contract, when the nodes obtain the elevator user complaint data, whether an elevator event indicated by the elevator user complaint data meets an elevator accident condition or not is judged according to an elevator accident condition which is obtained in advance and used for indicating the elevator accident and the elevator working state historical data matched with the elevator user complaint data; and when the elevator event indicated by the elevator user complaint data meets the elevator accident condition, a node voting judgment is triggered, and whether the elevator event meeting the elevator accident condition is published on the nodes of the system or not is judged. According to the system, an elevator accident is published by the nodes, so that generation of information isolated island is avoided by sharing information.

### BRIEF SUMMARY

Disclosed is a system for storing and sharing elevator trips, in accordance with claim 1.

In some embodiments, the controller is a central authority located on the network.

In some embodiments, the ride detail information indicative of one or more of: current time; current date; current weather; the first location; and a duration of the ride.

In some embodiments, the controller is configured to: receive ride quality information indicative of one or more of: ride quality including speed, acceleration, and vibrations; ride comfort level; impressions associated with visiting the first location; and store the ride quality information with the ride detail information.

In some embodiments, the controller is configured to: obtain media data related to the visiting the first location, the media data including one or more of: picture data, video data, and audio data; and store the media data with the ride detail information.

In some embodiments, the controller is configured to receive the media data from one or more of: a mobile phone; sensors located on the elevator car, and data stored on the network.

In some embodiments, the controller is configured to: determine that portions of the ride detail information include private data; store on the database on the network the ride detail information, excluding the portions that include private data; and store on another database on the network the ride detail information that is excluded from the ride detail information stored on the database.

In some embodiments, the controller is configured to: share the nonfungible token (NFT) via one or more social media platforms on a public network.

In some embodiments, the controller is configured to: authenticate the NFT and provide data associated with the NFT to an NFT wallet on a mobile phone.

Further disclosed is a method of storing and sharing elevator trips in accordance with claim 10.

In some embodiments, the controller is a central authority located on the network.

In some embodiments, the ride detail information indicative of one or more of: current time; current date; current weather; the first location; and a duration of the ride.

In some embodiments, the method further comprises receiving ride quality information, indicative of one or more of: ride quality including speed, acceleration, and vibrations; ride comfort level; impressions associated with visiting the first location; and storing the ride quality information with the ride detail information.

In some embodiments, the method further comprises obtain media data related to the visiting the first location, a media data including one or more of: picture data, video data, and audio data; and storing the media data with the ride detail information.

In some embodiments, the method further comprises receiving the media data from one or more of: a mobile phone; sensors located on the elevator car, and data stored on the network.

In some embodiments, the method further comprises determining that portions of the ride detail information include private data; wherein storing ride detail information on the database includes: storing on the database on the network the ride detail information, excluding the portions that include private data; and storing on another database on the network the ride detail information that is excluded from the ride detail information stored on the database.

In some embodiments, the method further comprises sharing the NFT via one or more social media platforms on a public network.

In some embodiments, the method further comprises authenticating the NFT and providing data associated with the NFT to an NFT wallet on a mobile phone.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a private network utilized in controlling the elevator system according to the disclosed embodiments;
FIG. 3 shows aspects of a blockchain implemented on the network;
FIG. 4 is a flowchart showing a method of storing and sharing elevator trips according to the disclosed embodiments; and
FIG. 5 is another flowchart showing a method of storing and sharing elevator trips according to the disclosed embodiments.

### DETAILED DESCRIPTION

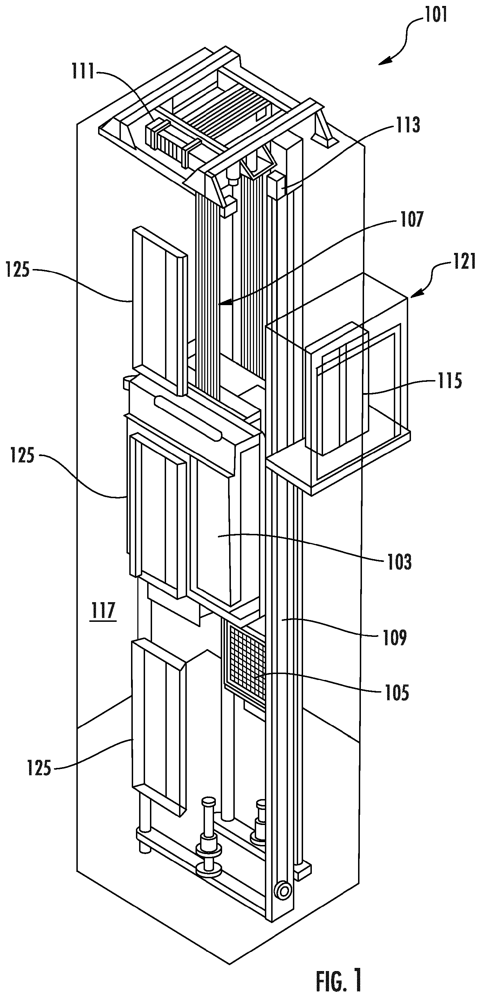

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The car controller 115 is located, as shown, in a controller room 121 of the elevator shaft 117 and is configured to control the operation of the elevator system 101, and particularly the elevator car 103. For example, the car controller 115 may provide drive signals to the machine 111 to control the acceleration, deceleration, leveling, stopping, etc. of the elevator car 103. The car controller 115 may also be configured to receive position signals from the position reference system 113 or any other desired position reference device. When moving up or down within the elevator shaft 117 along guide rail 109, the elevator car 103 may stop at one or more landings 125 as controlled by the car controller 115. Although shown in a controller room 121, those of skill in the art will appreciate that the car controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

As disclosed in greater detail below, the embodiments herein provide a verifiable platform to store and share data representing elevator trips that a passenger takes at locations of interest, such as famous landmarks including the Empire State Building. The embodiments provide an industry generated blockchain application that can help passengers capture and store the data, including one or more of images, videos, audio and text, representing occurrences of their visits to locations of interest and ensure that a later reviewing of the data is genuine and verifiable.

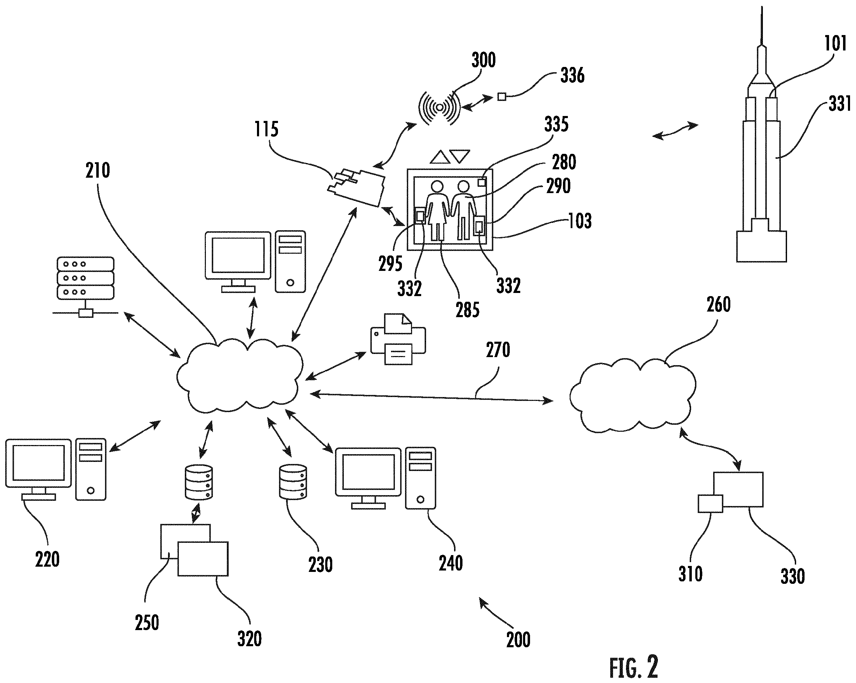

Turning to FIG. 2, a system for storing and sharing elevator trips (for simplicity, a system) 200 is disclosed according to an embodiment. The system 200 includes a network 210, which refers to interconnected network nodes 220, linked together to exchange data and share resources with each other. A network node 220 may be data communication equipment (DCE) such as a modem, hub or, switch, or data terminal equipment (DTE) such as two or more computers and printers and network attached storage. One or more databases including a database (e.g., a first database) 230 may also be provided on the network 210. The network 210 may include a central authority 240, which may be considered a network controller (or for simplicity, a controller 240) and which may authorize, support, and establish executive support for the network 210 and programs 250 running on the network 210. The network 210 may be configured to communicate with, or be part of, a public network 260 such as the internet, and such communications may occur over a communications link 270. The communications link 270 refers to the transmission media connecting two nodes. Links may be physical, e.g., cable wires or optical fibers, or free space used by wireless networks. In some embodiments the network 210 may be configured to send a data link 310 to data 320 stored on the network 270, such as in the database 230, to social media platforms 330 located on the public network 260.

The elevator system 101 may be located within a location of interest (or first location) 331. The elevator car 103 may be operationally connected to a car controller 115, and the car controller 115 may be operationally connected to the central authority 240 on the network 210. First and second passengers 280, 285 may be onboard the elevator 103. The passengers 280, 285 may have first and second mobile phones 290, 295. The mobile phones 290, 295 may communicate with the network 210 via a wireless communications network 300. The mobile phones 290, 295 may be registered with the network 210 with a user account for each passenger maintained on the network 210. The mobile phones 290, 295 may contain a software application 332, such as a mobile version of an NFT wallet, obtained via a mobile phone app store such as the App Store maintained by Apple Inc. It is to be appreciated that the passengers 280, 285 may have desktop versions of the NFT wallets. Sensors 335 onboard the elevator car 103 may be utilized to capture and transmit to the network 210, e.g., via the car controller 115 or the wireless network 300, various forms of media, including audio and video of the location of interest 331, which may be stored as the data 320 on the database 230. Additional sensors 336 may be located outside elevator car 103 to capture audio or video of the exterior of the location of interest 331, including weather, and such additional sensors 336 may communicate with the network 210 via the wireless communications network, though wired connections are within the scope of the embodiments.

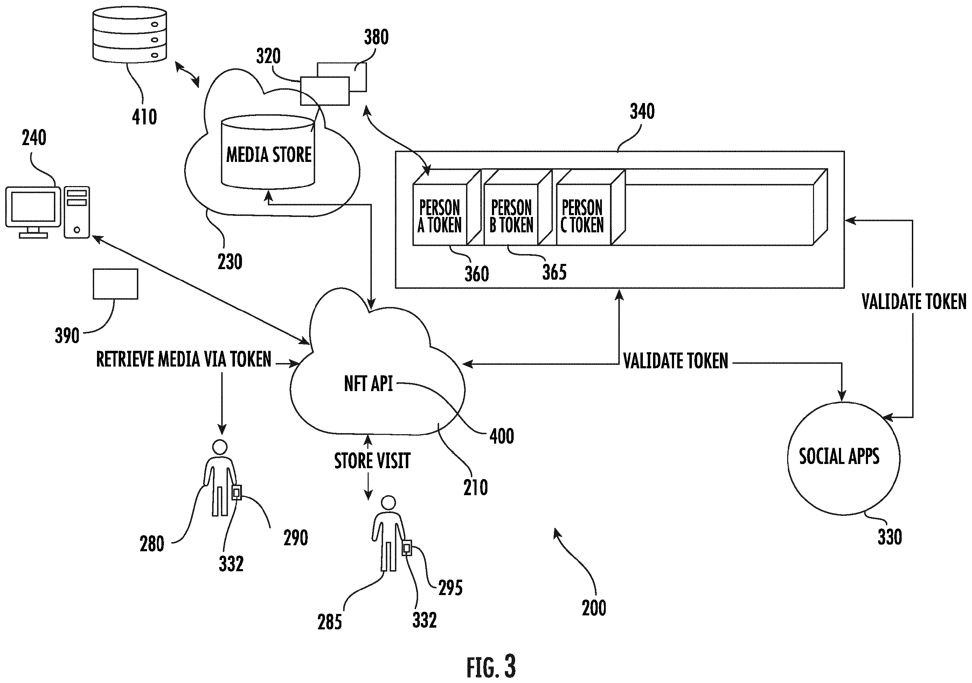

Turning to FIG. 3, to provide access to the data 320 on the database 230, the network 210 may be configured to manage a blockchain 340, which may also be referred to as a managed blockchain. The blockchain 340 may be a permissioned blockchain controlled under the network 210. The central authority 240 may determine which of the nodes 220 in the network 210 can be a node on the blockchain 340. That is, the blockchain 340 may consist of numerous blocks of data that are stored on designated nodes of the network 210 that, as a result, function as small servers. The central authority 240 may manually provision hardware, install software, create, and manage certificates for access control, and configure networking components to handle the blockchain 340. The nodes 350 of the network 210 that are assigned to the blockchain 340 are in electronic communication with each other and continuously exchange the newest information on the blockchain 340 with each other to ensure all designated nodes are updated.

In order to share data 320 in the database 230 representing elevator trips, the network 210 may be configured to create (e.g., mint) and lock (e.g., freeze) nonfungible tokens (NFTs) such as first and second NFTs 360, 365 for the respective passengers 280, 285, e.g., to turn a digital item of interest into an asset on the blockchain 340. The NFTs 360, 365 may be similarly configured so that further reference will be to the first NFT 360, which shall be generally referred to as an NFT 360. The NFT 360 may be linked to the data 320, e.g., that may include media data 380 (e.g. video, audio, images and/or text) indicative of the experience of passenger 280 during an elevator trip at the location of interest 331.

The media data 380 that is part of the data 320 may be captured utilizing the sensors 335, 336 (FIG. 2) that may obtain audio and video within the elevator car 103 to capture the elevator experience and, in some embodiments, outside the building at the location of interest 331 in which the elevator car 103 is situated. In some embodiments, the media data 380 may be fetched directly from the mobile phone 290, e.g., utilizing its motion, audio, image and video sensors. Such fetching may be automatic or by requesting input from the passenger 280 via a suitable mobile app. The images may be stored as portable network graphics (PNG) or graphics interchange format (GIF) files. Text may be available in portable document format (PDF), while music may be stored as an MP3 file format and video may be stored as an MP4. Other audio, video and image formats are within the scope of the embodiments.

The NFT 360 on the blockchain 340 may be owned by the business that owns, manages or services the elevator car 103, the passenger 280, or another party. As indicated, the mobile app 332 on the mobile phone 290 may be an NFT wallet that has access to the NFT 360 held on the blockchain 340. Such access may be provided by the mobile phone 290 receiving from the central authority 240 a private key 390 (e.g., utilizing public key infrastructure, or PKI) linked to the NFT 360. Utilizing NFT wallets, the NFT 360 may be shared with the other passenger 285 via their own NFT wallet, e.g., on their mobile device 295 or located elsewhere. In addition, the NFT 360 may be transferred to the NFT wallet of the passenger 280.

An application protocol interface (API) 400 may be issued to the mobile phones 290, 295 (or desktops or other devices) of the passengers 280, 285, directly with permission from the central authority 240 or via the app store. With the API 400, the mobile phones 290, 295 may be able to verify authenticity of the NFT 360 and fetch data 320, e.g., including media data 380, associated with the NFT 360. That is, the API 400 functions as a blockchain explorer, such as Etherscan.io, which is a publicly available search engine that lets users look up, confirm and validate transactions executed on the Ethereum blockchain via, e.g., OpenSea.io (an American online NFT marketplace headquartered in New York City, USA). With authorization from the central authority 240, the passengers 280, 285 may be able to share access to the NFTs 360, 365 with each other and with social media platforms 330 such as Facebook (owned by Meta Platforms). When the NFT 360 is shared among the passengers 280, 285, the API 400, e.g., on their mobile phones 290, 295 can be used to verify the authenticity of the data 320 associated with the NFT 360 and fetch the data 320.

The embodiments may include operating in different modes depending on the type of passenger 280, such as a visitor, an executive and a maintenance employee. When a visitor rides the elevator car 103, information that may be captured as data 320 for the NFT 360 may include ride detail information such as ride date and time, geographic location of the location of interest 331, elevator details, current weather, and a duration of the ride. When an executive or VIP rides the elevator car 103, the ride detail information may include ride quality details, such as ride quality, a comfort level during ride, weather conditions, and/or other data associated with the building or elevator ride, and/or passenger impressions of the visit to the location of interest 331 that may be solicited via a mobile app 333, or a user interface on a digital panel installed in the elevator car 103, etc. Ride quality details may also be measured with the help of sensors in the elevator system, or as indicated may be measured by sensors on mobile phone itself. Such sensors may provide velocity, acceleration and vibration data, among other data, indicative of ride quality. For a maintenance employee, data 320 may include indicators of the elevator car 103 operating within design parameter thresholds, such as sound, vibration data, etc. This information may be simultaneously updated for all maintenance employees registered to the blockchain 340 via shared access to the NFTs. In each instance, media data 380 such as pictures, video, audio, etc., may be captured and stored as part of the ride detail information.

The data 320 representing ride details and ride quality details may be stored in a database 230 that is linked to the NFT 360 in the blockchain 340. Private data, if collected, may be stored on another database (e.g., a second database) 410 on the network 210, and optionally not associated with the NFT 360, to comply with requirements to protect such information.

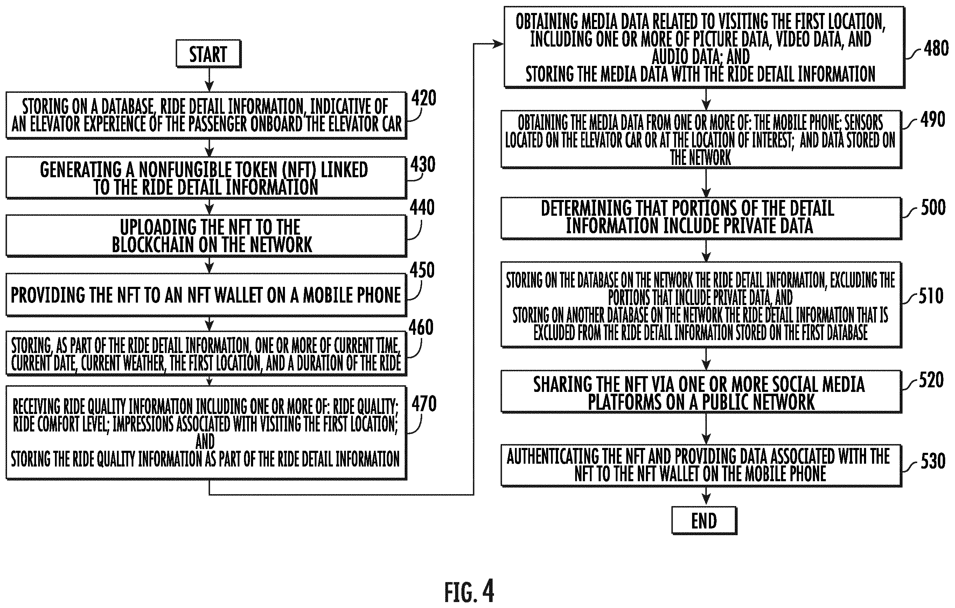

Turning to FIG. 4, a flowchart shows a method of storing and sharing elevator trips according to embodiments. As shown in block 420, the method includes the system 200, via the central authority 240 (or controller 240) in electronic communication with the elevator car 103 disposed at the first location 331, storing on a database 230, ride detail information, indicative of an elevator ride experience of the passenger 280 onboard the elevator car 103. As shown in block 430, the method includes the system 200 generating an NFT 360 that is linked to the ride detail information. As shown in block 440, the method includes the system 200 uploading the NFT 360 to the blockchain 340 implemented on the network 210. As shown in block 450, the method includes the system 200 providing the NFT to an NFT wallet of the passenger 280, which may be on the mobile phone 290 of the passenger 280. As shown in block 460, the method includes the system 200 storing, as part of the ride detail information, one or more of current time, current date, current weather, the location of interest 331, and a duration of the ride.

As shown in block 460, the method includes the system 200 receiving ride quality information, including one or more of: ride quality; ride comfort level; impressions associated with visiting the location of interest 331. Other user interfaces are within the scope of the embodiments. As further shown in block 470, the method includes the system 200 storing the ride quality information as part of the ride detail information.

As shown in block 480, the method includes the system 200 obtaining media data 380 related to visiting the location of interest 331 including one or more of picture data, video data, and audio data. As further shown in block 480, the method includes the system 200 storing the media data 380 as part of the ride detail information. As shown in block 490 the method includes the system 200 obtaining the media data 380 from one or more of the mobile phone 290 and the sensors 335, 336 located on the elevator car 103 or outside the car 103 at the location of interest 331, and stored data, e.g., previously stored on the database which may sufficiently show desired features of the location of interest 331 to capture the ride experience of the passenger 280.

As shown in block 500, the method includes the system 200 determining that portions of the ride detail information include private data. This could occur by the passenger utilizing the mobile app 333, or an interactive elevator car panel located within the elevator car, or otherwise, to identify private data that is part of the ride detail information. As shown in block 510, storing ride detail information on the database 230 (block 420) includes the system 200 storing on the database 230 on the network 210 the ride detail information, excluding the portions that include private data. As also shown in block 510, the method includes the system 200 storing on another database 410 on the network 210 the ride detail information that is excluded from the ride detail information stored on the database 230.

As shown in block 520, the method includes the system 200 sharing the NFT 360 via one or more social media platforms 330 on the public network 260, e.g., utilizing a link to the NFT 360. This could be performed automatically based on stored passenger preferences or based on instructions from the passenger 280, e.g., utilizing the mobile app 333. As shown in block 530, the method includes the system 200 authenticating the NFT 360 and providing the data 320 associated with the NFT 360 to an NFT wallet, which may be, e.g., on the mobile phone 290. This could be performed responsive to the passenger 280 seeking to authenticate the NFT 360 and retrieve data 320 stored on the network 210 utilizing the NFT wallet 332. It is within the scope of the embodiments for the other passenger 285 to use its NFT wallet to authenticate the NFT 360 or retrieve the data 320.

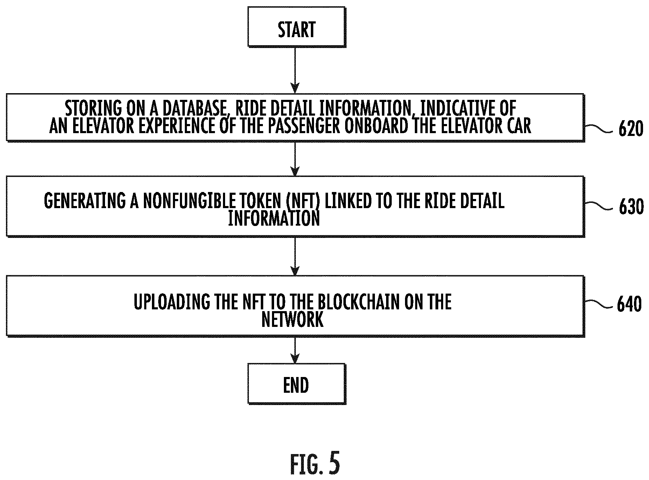

Turning to FIG. 5, another flowchart shows more generally the method of storing and sharing elevator trips according to embodiments. As shown in block 620, the method includes the system 200, via the central authority 240 (or controller 240) in electronic communication with the elevator car 103 disposed at the first location 331, As shown in storing on a database 230, ride detail information indicative of an elevator ride experience of the passenger onboard the elevator car. As shown in block 630, the method includes the system 200 generating an NFT 360 that is linked to the ride detail information. As shown in block 640, the method includes the system 200 uploading the NFT 360 to the blockchain 340 implemented on the network 210.

The above embodiments provide an industry specific blockchain in a system that stores data representing occurrences of visits to locations of interest. The blockchain is configured to operate in a public mode. An elevator passenger can use an NFT generated by the system to validate their travel to locations of interest such as famous landmarks and monuments. The NFT can be linked to social media platforms where the passenger can post their authentic visit to tourist spots. APIs 400 may be utilized to verify authenticity of the NFT, such as by the passenger who is the subject of the NFT or by someone with whom the passenger has shared access to the NFT. APIs 400 may also be utilized to fetch data, including media data, associated with the NFT.

Sensor data identified herein may be obtained and processed separately, or simultaneously and stitched together, or a combination thereof, and may be processed in a raw or complied form. The sensor data may be processed on the sensor (e.g. via edge computing), by controllers identified or implicated herein, on a cloud service, or by a combination of one or more of these computing systems. The senor may communicate the data via wired or wireless transmission lines, applying one or more protocols as indicated below.

Wireless connections may apply protocols that include local area network (LAN, or WLAN for wireless LAN) protocols. LAN protocols include WiFi technology, based on the Section 802.11 standards from the Institute of Electrical and Electronics Engineers (IEEE). Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. LAN and WAN protocols may be generally considered TCP/IP protocols (transmission control protocol/Internet protocol), used to govern the connection of computer systems to the Internet. Wireless connections may also apply protocols that include private area network (PAN) protocols. PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create passengeral area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. The Internet of things (IoT) describes the network of physical objects-"things"-that are embedded with sensors, software, and other technologies for the purpose of connecting and exchanging data with other devices and systems over the Internet. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). Other wireless platforms based on RFID technologies include Near-Field-Communication (NFC), which is a set of communication protocols for low-speed communications, e.g., to exchange date between electronic devices over a short distance. NFC standards are defined by the ISO/IEC (defined below), the NFC Forum and the GSMA (Global System for Mobile Communications) group. The above is not intended on limiting the scope of applicable wireless technologies.

Wired connections may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a master/slave protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

When data is transmitted over a network between end processors as identified herein, the data may be transmitted in raw form or may be processed in whole or part at any one of the end processors or an intermediate processor, e.g., at a cloud service (e.g. where at least a portion of the transmission path is wireless) or other processor. The data may be parsed at any one of the processors, partially or completely processed or complied, and may then be stitched together or maintained as separate packets of information. Each processor or controller identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium.

The controller may further include, in addition to a processor and nonvolatile memory, one or more input and/or output (I/O) device interface(s) that are communicatively coupled via an onboard (local) interface to communicate among other devices. The onboard interface may include, for example but not limited to, an onboard system bus, including a control bus (for inter-device communications), an address bus (for physical addressing) and a data bus (for transferring data). That is, the system bus may enable the electronic communications between the processor, memory and I/O connections. The I/O connections may also include wired connections and/or wireless connections identified herein. The onboard interface may have additional elements, which are omitted for simplicity, such as controllers, buffers (caches), drivers, repeaters, and receivers to enable electronic communications. The memory may execute programs, access data, or lookup charts, or a combination of each, in furtherance of its processing, all of which may be stored in advance or received during execution of its processes by other computing devices, e.g., via a cloud service or other network connection identified herein with other processors.

Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system (200) for storing and sharing elevator trips, comprising:
a controller (240);
a database (230) operationally coupled to the controller (240);
an elevator car (103) in electronic communication with the controller (240) and operationally located at a first location (331);
a network (210) in electronic communication with the controller (240);
a blockchain (340) implemented on the network (210),
wherein the controller (240) is configured to:
store on the database (230), ride detail information indicative of an elevator ride experience of a passenger (280, 285) onboard the elevator car (103); and
**characterised in that** the controller (240) is configured to:
generate a nonfungible token (360) linked to the ride detail information;
upload the nonfungible token (360) to the blockchain (340); and
provide the nonfungible token (360) to a nonfungible token wallet (332) on a mobile phone (290, 295).

2. The system (200) of claim 1, wherein
the controller (240) is a central authority located on the network (210).

3. The system (200) of claim 1 or 2, wherein
the ride detail information is indicative of one or more of:
current time; current date; current weather; the first location (331); and a duration of the ride.

4. The system (200) of any preceding claim, wherein
the controller (240) is configured to:
receive ride quality information indicative of one or more of: ride quality including speed, acceleration and vibrations; ride comfort level; impressions associated with visiting the first location (331); and
store the ride quality information with the ride detail information.

5. The system (200) of any preceding claim, wherein
the controller (240) is configured to:
obtain media data (380) related to the visiting the first location (331), the media data (380) including one or more of: picture data, video data, and audio data; and
store the media data (380) with the ride detail information.

6. The system (200) of claim 5, wherein
the controller (240) is configured to receive the media data (380) from one or more of: a mobile phone (290, 295); sensors (335, 336) located on the elevator car (103), and data (320) stored on the network (210).

7. The system (200) of any preceding claim, wherein
the controller (240) is configured to:
determine that portions of the ride detail information include private data;
store on the database (230) on the network (210) the ride detail information, excluding the portions that include private data; and
store on another database (410) on the network (210) the ride detail information that is excluded from the ride detail information stored on the database (230).

8. The system (200) of any preceding claim, wherein
the controller (240) is configured to:
share the nonfungible token (360) via one or more social media platforms (330) on a public network (260).

9. The system (200) of any preceding claim, wherein
the controller (240) is configured to:
authenticate the nonfungible token (360) and provide data (320) associated with the nonfungible token (360) to a nonfungible token wallet (332) on a mobile phone (290, 295).

10. A method of storing and sharing elevator trips, comprising:
storing on a database (230), by a controller (240) in electronic communication with an elevator car (103) disposed at a first location (331), ride detail information indicative of a ride experience of a passenger (280, 285) onboard the elevator car (103);
**characterised by**:
generating, by the controller (240), a nonfungible token (360) from the ride detail information;
uploading, by the controller (240), the nonfungible token (360) to a blockchain (340) that is implemented on a network (210); and
providing, by the controller (240), the nonfungible token (360) to a nonfungible token wallet (332) on a mobile phone (290, 295).

11. The method of claim 10, wherein
the controller (240) is a central authority located on the network (210).

12. The method of claim 10 or 11, further comprising
obtaining media data (380) related to the visiting the first location (331), the media data (380) including one or more of: picture data, video data, and audio data; and
storing the media data (380) with the ride detail information;
the method optionally comprising
receiving the media data (380) from one or more of: a mobile phone (290, 295); sensors (335, 336) located on the elevator car (103), and data (320) stored on the network (210).

13. The method of claim 10, 11 or 12, further comprising
determining that portions of the ride detail information include private data;
wherein storing ride detail information on the database (230) includes:
storing on the database (230) on the network (210) the ride detail information, excluding the portions that include private data; and
storing on another database (410) on the network (210) the ride detail information that is excluded from the ride detail information stored on the database (230).

14. The method of any of claims 10 to 13, further comprising
authenticating the nonfungible token (360) and providing data (320) associated with the nonfungible token (360) to a nonfungible token wallet (332) on a mobile phone (290, 295).

## Patentansprüche

1. System (200) zum Speichern und Teilen von Aufzugsfahrten, umfassend:
eine Steuerung (240);
eine Datenbank (230), die betriebsfähig mit der Steuerung (240) gekoppelt ist;
eine Aufzugskabine (103), die in elektronischer Kommunikation mit der Steuerung (240) steht und betriebsfähig an einem ersten Standort (331) angeordnet ist;
ein Netzwerk (210) in elektronischer Kommunikation mit der Steuerung (240);
eine Blockchain (340), die auf dem Netzwerk (210) implementiert ist,
wobei die Steuerung (240) zu Folgendem konfiguriert ist:
Speichern von Fahrtdetailinformationen, die eine Aufzugsfahrterfahrung eines Fahrgastes (280, 285) an Bord der Aufzugskabine (103) angeben, in der Datenbank (230); und
**dadurch gekennzeichnet, dass** die Steuerung (240) zu Folgendem konfiguriert ist:
Erzeugen eines nicht fungiblen Tokens (360), der mit den Fahrtdetailinformationen verbunden ist;
Hochladen des nicht fungiblen Tokens (360) in die Blockchain (340); und
Bereitstellen des nicht fungiblen Tokens (360) an eine nicht fungible Token-Wallet (332) auf einem Mobiltelefon (290, 295).

2. System (200) nach Anspruch 1, wobei
die Steuerung (240) eine zentrale Autorität ist, die sich in dem Netzwerk (210) befindet.

3. System (200) nach Anspruch 1 oder 2, wobei
die Fahrtdetailinformationen eines oder mehrere von Folgendem angeben:
aktuelle Uhrzeit; aktuelles Datum; aktuelles Wetter; den ersten Standort (331); und eine Dauer der Fahrt.

4. System (200) nach einem der vorhergehenden Ansprüche, wobei die Steuerung (240) zu Folgendem konfiguriert ist:
Empfangen von Fahrtqualitätsinformationen, die eines oder mehrere von Folgendem angeben: Fahrtqualität, einschließlich Geschwindigkeit, Beschleuniger und Vibrationen; Grad des Fahrkomforts; Eindrücke, die mit dem Besuch des ersten Standorts (331) zugeordnet sind; und
Speichern der Fahrtqualitätsinformationen mit den Fahrtdetailinformationen.

5. System (200) nach einem der vorhergehenden Ansprüche, wobei die Steuerung (240) zu Folgendem konfiguriert ist:
Erlangen von Mediendaten (380), die in Bezug auf den Besuch des ersten Standorts (331) stehen, wobei die Mediendaten (380) eines oder mehrere von Folgendem beinhalten: Bilddaten, Videodaten und Audiodaten; und
Speichern der Mediendaten (380) mit den Fahrtdetailinformationen.

6. System (200) nach Anspruch 5, wobei
die Steuerung (240) dazu konfiguriert ist, die Mediendaten (380) von einem oder mehreren von Folgenden zu empfangen: einem Mobiltelefon (290, 295); Sensoren (335, 336), die an dem Aufzugskabine (103) angeordnet sind, und Daten (320), die in dem Netzwerk (210) gespeichert sind.

7. System (200) nach einem der vorhergehenden Ansprüche, wobei die Steuerung (240) zu Folgendem konfiguriert ist:
Bestimmen, dass Abschnitte der Fahrtdetailinformationen private Daten beinhalten;
Speichern der Fahrtdetailinformationen in der Datenbank (230) in dem Netzwerk (210), wobei die Abschnitte, die private Daten beinhalten, ausgeschlossen werden; und
Speichern der Fahrtdetailinformationen, die von den Fahrtdetailinformationen, die in der Datenbank (230) gespeichert sind, ausgeschlossen werden, in einer anderen Datenbank (410) in dem Netzwerk (210).

8. System (200) nach einem der vorhergehenden Ansprüche, wobei die Steuerung (240) zu Folgendem konfiguriert ist:
Teilen des nicht fungiblen Tokens (360) über eine oder mehrere Social-Media-Plattformen (330) in einem öffentlichen Netzwerk (260).

9. System (200) nach einem der vorhergehenden Ansprüche, wobei die Steuerung (240) zu Folgendem konfiguriert ist:
Authentifizieren des nicht fungiblen Tokens (360) und Bereitstellen von Daten (320), die dem nicht fungiblen Token (360) zugeordnet sind, an eine nicht fungible Token-Wallet (332) auf einem Mobiltelefon (290, 295).

10. Verfahren zum Speichern und Teilen von Aufzugfahrten, umfassend:
Speichern von Fahrtdetailinformationen, die eine Fahrterfahrung eines Fahrgastes (280, 285) an Bord der Aufzugskabine (103) angeben, in einer Datenbank (230) durch eine Steuerung (240) in elektronischer Kommunikation mit einer Aufzugskabine (103), die an einem ersten Standort (331) angeordnet ist;
**dadurch gekennzeichnet, dass**:
Erzeugen eines nicht fungiblen Tokens (360) durch die Steuerung (240) aus den Fahrtdetailinformationen;
Hochladen des nicht fungiblen Tokens (360) durch die Steuerung (240) in eine Blockchain (340), die in einem Netzwerk (210) implementiert ist; und
Bereitstellen des nicht fungiblen Tokens (360) an eine nicht fungible Token-Wallet (332) auf einem Mobiltelefon (290, 295) durch die Steuerung (240).

11. Verfahren nach Anspruch 10, wobei
die Steuerung (240) eine zentrale Autorität ist, die sich in dem Netzwerk (210) befindet.

12. Verfahren nach Anspruch 10 oder 11, ferner umfassend
Erlangen von Mediendaten (380), die in Bezug auf den Besuch des ersten Standorts (331) stehen, wobei die Mediendaten (380) eines oder mehrere von Folgendem beinhalten: Bilddaten, Videodaten und Audiodaten; und
Speichern der Mediendaten (380) mit den Fahrtdetailinformationen;
das Verfahren optional ferner umfassend
Empfangen der Mediendaten (380) von einem oder mehreren von Folgenden: einem Mobiltelefon (290, 295); Sensoren (335, 336), die an dem Aufzugskabine (103) angeordnet sind, und Daten (320), die in dem Netzwerk (210) gespeichert sind.

13. Verfahren nach Anspruch 10, 11 oder 12, ferner umfassend
Bestimmen, dass Abschnitte der Fahrtdetailinformationen private Daten beinhalten;
wobei das Speichern von Fahrtdetailinformationen in der Datenbank (230) Folgendes beinhaltet:
Speichern der Fahrtdetailinformationen in der Datenbank (230) in dem Netzwerk (210), wobei die Abschnitte, die private Daten beinhalten, ausgeschlossen werden; und
Speichern der Fahrtdetailinformationen, die von den Fahrtdetailinformationen, die in der Datenbank (230) gespeichert sind, ausgeschlossen werden, in einer anderen Datenbank (410) in dem Netzwerk (210).

14. Verfahren nach einem der Ansprüche 10 bis 13, ferner umfassend
Authentifizieren des nicht fungiblen Tokens (360) und Bereitstellen von Daten (320), die dem nicht fungiblen Token (360) zugeordnet sind, an eine nicht fungible Token-Wallet (332) auf einem Mobiltelefon (290, 295).

## Revendications

1. Système (200) de stockage et de partage de trajets d'ascenseur, comprenant :
un dispositif de commande (240) ;
une base de données (230) couplée de manière opérationnelle au dispositif de commande (240) ;
une cabine d'ascenseur (103) en communication électronique avec le dispositif de commande (240) et située de manière opérationnelle au niveau d'un premier emplacement (331) ;
un réseau (210) en communication électronique avec le dispositif de commande (240) ;
une blockchain (340) mise en œuvre sur le réseau (210),
dans lequel le dispositif de commande (240) est configuré pour :
stocker dans la base de données (230) des informations détaillées sur le déplacement indicatives de l'expérience de déplacement en ascenseur d'un passager (280, 285) à bord de la cabine d'ascenseur (103) ; et
**caractérisé en ce que** le dispositif de commande (240) est configuré pour :
générer un jeton non fongible (360) lié aux informations détaillées sur le déplacement ;
télécharger le jeton non fongible (360) sur la blockchain (340) ; et
fournir le jeton non fongible (360) à un portefeuille de jetons non fongibles (332) sur un téléphone mobile (290, 295).

2. Système (200) selon la revendication 1, dans lequel
le dispositif de commande (240) est une autorité centrale située sur le réseau (210).

3. Système (200) selon la revendication 1 ou 2, dans lequel
les informations détaillées sur le déplacement indiquent un ou plusieurs des éléments suivants :
l'heure actuelle ; la date actuelle ; la météo actuelle ; le premier emplacement (331) ; et la durée du déplacement.

4. Système (200) selon une quelconque revendication précédente, dans lequel
le dispositif de commande (240) est configuré pour :
recevoir des informations sur la qualité de déplacement indiquant un ou plusieurs des éléments suivants : la qualité de déplacement, y compris la vitesse, l'accélération et les vibrations ; le niveau de confort de déplacement ; les impressions associées à la visite du premier emplacement (331) ; et
stocker les informations sur la qualité de déplacement avec les informations détaillées sur le déplacement.

5. Système (200) selon une quelconque revendication précédente, dans lequel
le dispositif de commande (240) est configuré pour :
obtenir des données multimédias (380) liées à la visite du premier emplacement (331), les données multimédias (380) comportant une ou plusieurs des données suivantes : données d'image, données vidéo et données audio ; et
stocker les données multimédias (380) avec les informations détaillées sur le déplacement.

6. Système (200) selon la revendication 5, dans lequel
le dispositif de commande (240) est configuré pour recevoir les données multimédias (380) provenant d'un ou de plusieurs des éléments suivants : un téléphone mobile (290, 295) ; des capteurs (335, 336) situés sur la cabine d'ascenseur (103) et des données (320) stockées sur le réseau (210).

7. Système (200) selon une quelconque revendication précédente, dans lequel
le dispositif de commande (240) est configuré pour :
déterminer que des parties des informations détaillées sur le déplacement comportent des données privées ;
stocker dans la base de données (230) sur le réseau (210) les informations détaillées sur le déplacement, à l'exclusion des parties qui comportent des données privées ; et
stocker dans une autre base de données (410) sur le réseau (210) les informations détaillées sur le déplacement qui sont exclues des informations détaillées sur le déplacement stockées dans la base de données (230).

8. Système (200) selon une quelconque revendication précédente, dans lequel
le dispositif de commande (240) est configuré pour :
partager le jeton non fongible (360) via une ou plusieurs plateformes de médias sociaux (330) sur un réseau public (260).

9. Système (200) selon une quelconque revendication précédente, dans lequel
le dispositif de commande (240) est configuré pour :
authentifier le jeton non fongible (360) et fournir des données (320) associées au jeton non fongible (360) à un portefeuille de jetons non fongibles (332) sur un téléphone mobile (290, 295).

10. Procédé de stockage et de partage de trajets d'ascenseur, comprenant :
le stockage dans une base de données (230), par un dispositif de commande (240) en communication électronique avec une cabine d'ascenseur (103) disposée au niveau d'un premier emplacement (331), d'informations détaillées sur le déplacement indicatives d'une expérience de déplacement d'un passager (280, 285) à bord de la cabine d'ascenseur (103) ;
**caractérisé par** :
la génération, par le dispositif de commande (240), d'un jeton non fongible (360) à partir des informations détaillées sur le déplacement ;
le téléchargement, par le dispositif de commande (240), du jeton non fongible (360) vers une blockchain (340) qui est mise en œuvre sur un réseau (210) ; et
la fourniture, par le dispositif de commande (240), du jeton non fongible (360) à un portefeuille de jetons non fongibles (332) sur un téléphone mobile (290, 295).

11. Procédé selon la revendication 10, dans lequel
le dispositif de commande (240) est une autorité centrale située sur le réseau (210).

12. Procédé selon la revendication 10 ou 11, comprenant également
l'obtention de données multimédias (380) liées à la visite du premier emplacement (331), les données multimédias (380) comportant une ou plusieurs des données suivantes : données d'image, données vidéo et données audio ; et
le stockage des données multimédias (380) avec les informations détaillées sur le déplacement ;
le procédé comprenant éventuellement
la réception des données multimédias (380) provenant d'un ou de plusieurs des éléments suivants : un téléphone mobile (290, 295) ; des capteurs (335, 336) situés sur la cabine d'ascenseur (103) et des données (320) stockées sur le réseau (210).

13. Procédé selon la revendication 10, 11 ou 12, comprenant également
la détermination que des parties des informations détaillées sur le déplacement comportent des données privées ;
dans lequel le stockage des informations détaillées sur le déplacement dans la base de données (230) comporte :
le stockage dans la base de données (230) sur le réseau (210) des informations détaillées sur le déplacement, à **l'exclusion** des parties qui comportent des données privées ; et
le stockage dans une autre base de données (410) sur le réseau (210) des informations détaillées sur le déplacement qui sont exclues des informations détaillées sur le déplacement stockées dans la base de données (230).

14. Procédé selon l'une quelconque des revendications 10 à 13, comprenant également
l'authentification du jeton non fongible (360) et la fourniture de données (320) associées au jeton non fongible (360) à un portefeuille de jetons non fongibles (332) sur un téléphone mobile (290, 295).
